(19) Europäisches Patentamt
European Patent Office
Office européen des brevets

(11) **EP 4 341 553 B1**

(12) **EUROPEAN PATENT SPECIFICATION**

(45) Date of publication and mention of the grant of the patent:
**04.02.2026 Bulletin 2026/06**

(21) Application number: **22725989.2**

(22) Date of filing: **16.05.2022**

(51) International Patent Classification (IPC):
**F03D 7/02** *(2006.01)*

(52) Cooperative Patent Classification (CPC):
**F03D 7/0224; F03D 7/024; F03D 7/0298;**
F03D 17/011; F03D 17/014; F05B 2260/821;
F05B 2270/331; Y02E 10/72

(86) International application number:
**PCT/DK2022/050100**

(87) International publication number:
**WO 2022/242816 (24.11.2022 Gazette 2022/47)**

(54) **INDIVIDUAL PITCH CONTROL WITH UNAVAILABLE BLADE LOAD SENSOR**

INDIVIDUELLE PITCHSTEUERUNG BEI NICHT VERFÜGBAREM BLATTLASTSENSOR

RÉGLAGE DE PAS INDIVIDUEL AVEC CAPTEUR DE CHARGE DE PALE INDISPONIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2021 DK PA202170245**

(43) Date of publication of application:
**27.03.2024 Bulletin 2024/13**

(73) Proprietor: **VESTAS WIND SYSTEMS A/S**
**8200 Aarhus N (DK)**

(72) Inventors:
• **GILES, Alexander Duncan**
**8200 Aarhus N (DK)**
• **THOMSEN, Jesper Sandberg**
**8200 Aarhus N (DK)**
• **VIOLATO, Gustavo Oliveira**
**8200 Aarhus N (DK)**

(74) Representative: **Vestas Patents Department**
**Hedeager 42**
**8200 Aarhus N (DK)**

(56) References cited:
EP-A1- 2 447 527     WO-A1-2020/239177
ES-A2- 2 408 246     US-A1- 2015 132 129
US-A1- 2017 138 348

• X. WEI ET AL: "Sensor and actuator fault diagnosis for wind turbine systems by using robust observer and filter", WIND ENERGY, vol. 14, no. 4, 25 November 2010 (2010-11-25), GB, pages 491 - 516, XP055330826, ISSN: 1095-4244, DOI: 10.1002/we.438

**Description**

FIELD OF THE INVENTION

The present invention relates to pitch actuation in a situation where one blade load sensor is unavailable.

BACKGROUND OF THE INVENTION

Wind turbines, as known in the art, comprise a tower supporting a nacelle and a rotor with a number of pitch-adjustable rotor blades.

For large wind turbines, there is generally a benefit in controlling the pitch for the purpose of load reduction, e.g. to alleviate asymmetric loads on the rotor and excessive loads experienced by a blade, either in the flap direction or in the edgewise direction. In particular, excitations experienced by a blade in the edgewise direction are generally undesirable as the blades are typically weakly damped in that direction.

It is generally known to base individual pitch control on blade load sensor signals, such as blade load sensors placed in the root section of a blade. Individual pitch control normally relies on all three blade sensor measurements being available. If one sensor goes offline and becomes unavailable, the wind turbine may be derated in a safe mode to ensure operation well within the design load envelope. This causes the turbine to operate in a less efficient manner, which negatively impacts on the energy capture. An example of prior art can be found in ES 2 408 246 A2.

SUMMARY OF THE INVENTION

It would be advantageous to achieve an improved manner of blade pitch control based on blade load sensor signals. In particular, it would be advantageous to provide a control system with a certain level of fault tolerance to a situation where a blade load sensor becomes unavailable.

Accordingly, in a first aspect, there is provided a rotor control system according to claim 1 for actuating pitch of pitch-adjustable rotor blades of a three-bladed wind turbine, the rotor control system comprises a pitch actuating unit for determining pitch modification signals to be applied to a pitch actuator for actuating the pitch of the pitch adjustable rotor blades in the event one of the blade load signals is unavailable;

the pitch actuation unit being arranged to:

> receive blade load signals for each of the pitch adjustable rotor blades and an availability signal for each of the blade load signals;
> construct combined load signals based on the available blade load signals, with the combined load signals being represented in a reference frame along a first and a second reference direction as a first signal component ($A$) and a second signal component ($B$), respectively;
> perform a control action (CA) to the first signal component and the second signal component; and
> apply the pitch modification signals ($\Delta\theta_1$, $\Delta\theta_2$, $\Delta\theta_3$) to the pitch actuator;
> wherein the combined load signals are constructed by:

>> apply a high pass filter to the blade load signals;
>> transform the blade load signals using a first coordinate transformation ($T1$) to an intermediate coordinate frame, where each of the associated components of the load signal in the intermediate coordinate frame are orthogonal to each other, and wherein, in the transform, the unavailable blade load signal is replaced with an estimated signal;
>> set a first intermediate component as the first component of the transformed blade load signals resulting from the first coordinate transformation ($T1$); and
>> set a second intermediate component as the second component of the transformed blade load signals resulting from the first coordinate transformation ($T1$);
>> rotate the first intermediate component and the second intermediate component to align with the reference frame along the first and the second reference direction; and
>> set the first signal component $(A)$ and the second signal component $(B)$ as the rotated first and second intermediate components, respectively.

In an embodiment, the pitch actuation unit may conduct the mentioned steps sequentially, and potentially with further steps being performed in between the mentioned steps.

The present invention provides a rotor control system which uses pitch modification signals for actuating pitch of pitch-adjustable rotor blades, with the aim to obtain a reduction in blade loads in a situation where one blade load sensor signal is unavailable. Embodiments of the present invention are able to keep the turbine in normal operation with the ability to actively provide load reduction via pitching, even in a situation where a blade load signal is lost, so that only two blade load signals are available.

This is obtained by providing input signals to the controller performing the control action, where the input signals are based on the load signals of the available load sensors. This is obtained by constructing combined load signals based on the available blade load signals and using the combined signals in the control action.

The combined load signals are constructed by applying a high pass filter to the blade load signals and transforming the two available blade load signals using a first coordinate transformation to an intermediate coordinate frame, where each of the associated components of the load signal in the intermediate coordinate frame are orthogonal to each other, and wherein, in the transform, the unavailable blade load signal is replaced with an estimated signal. Thus, the blade load signal values, which are initially obtained in a rotating coordinate frame where each axis is spaced 120 degrees apart, are transformed into signal values of the intermediate coordinate frame where the axes are normal to each other.

By application of the high pass filter, in combination with using an estimated signal as the unavailable signal, an accurate representation of all three load signals can be obtained in the intermediate coordinate frame. In the intermediate frame, flap moments correspond approximately to a measure of the thrust, and edge moments correspond approximately to a measure of the torque. In either case, variations in these signals will normally occur at a low frequency. Thereby, by application of a high pass filter, the contribution from the unavailable sensor is filtered out, and the unavailable signal can be estimated with a high degree of accuracy.

In an embodiment, the estimated signal is a superposition of the two available blade load signals. This may be obtained by constructing the estimated signal as a linear combination of the two available signals offset by a constant.

For the three-bladed turbine, three pairs of available blade load measurements are possible: the AB blade load pairing, the AC blade load pairing and the BC blade load pairing, with the three blades named A, B and C respectively. In the event of a sensor signal being unavailable, only one pairing is valid, with the specific pairing depending on the unavailable sensor signal; as an example, if the sensor for blade C is unavailable, the only valid pairing will be the AB blade pair. The first intermediate component is set as the first component of the transformed blade load signals resulting from the first coordinate transformation, and the second intermediate component is set as the second component of the transformed blade load signals resulting from the first coordinate transformation. These intermediate components form a vector which is then rotated to align with the reference frame along the first and the second reference direction, and applied as inputs to a control element for performing a control action operating in the fixed frame.

As inputs to the rotor control system, the blade load signals for each of the pitch adjustable rotor blades and an availability signal for each of the blade load signals are received. In this regard, if a blade load signal becomes unavailable, a blade load signal from the unavailable sensor is not as such received; rather, a null signal is received or a corrupt signal is received. If a signal is not available, any signal content still received from the corresponding load sensor is disregarded by the rotor control system.

Based on the inputs, combined load signals are constructed. The combined load signals being represented in a reference frame along a first and a second reference direction, thereby providing a first signal component and a second signal component. The reference frame being the frame in which the control action is applied. In embodiments the reference frame is a fixed frame along a yaw moment direction and a tilt moment direction. The reference frame may also be a fixed frame along a whirling direction of the rotor. The control action is applied in the reference frame providing a first resulting signal component and a second resulting signal component. The controlled signal may be transformed back into the rotating frame for application as pitch modification signals to the pitch actuator. This may be obtained by applying an m-blade coordinate transformation to the first resulting signal components. The m-blade coordinate transformation may be an inverse Coleman transformation.

An important feature of the present invention relates to coordinate transformation. In general, a coordinate transformation takes a signal expressed in a first coordinate frame and into a second coordinate frame. A coordinate frame may also be referred to as a reference frame. Such coordinate transformation may be an m-blade transformation, which is also referred to in the art as a multi-blade transformation. Examples of coordinate transformations include the Clarke transformation and the Coleman transformation. However, other transformations may also fall into the category of coordinate transformations, hereunder so-called D-Q transformation and Park transformation or similar transformations. It is within the abilities of the skilled person to determine an alternative transformation which may not strictly be a specific transformation, but which operates in an equivalent manner.

As used herein, a coordinate transformation is applied both as is (i.e. without a prefix) and in an inverse form. In this regard, signals may be measured, modified and actuated in same or different coordinate frames. In particular, a coordinate transformation may take a signal measured in a rotating reference, or coordinate, frame, i.e. signals obtained on rotating blades, and transforms the signal into a fixed reference frame of two components. The inverse m-blade transformation takes the two signal components and transforms them back to the rotating frame to provide signal components (the pitch modification signals) which can be imposed onto the three pitch actuators.

In a further aspect, the invention relates to a wind turbine comprising the rotor control system according the first aspect. In yet further aspects, the invention relates to a method of actuating pitch of pitch adjustable rotor blades of a wind turbine and to a computer program product. The computer program product may be provided on a computer readable storage medium or being downloadable from a communication network. The computer program product comprises instructions to cause a data processing system, e.g. in the form of a controller, to carry out the instruction when loaded onto a data processing system.

In general, the rotor control system may be implemented on a unit or collection of functional units which comprises one or more processors, input/output interface(s) and a memory capable of storing instructions can be executed by a processor.

In general, the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

Fig. 1 illustrates, in a schematic view, an example of a wind turbine;
Fig. 2 is a diagram schematically illustrating an embodiment of a feedback speed controller;
Fig. 3 schematically illustrates an embodiment of a pitch actuation unit; and
Fig. 4 illustrates simulated load signals by applying the embodiment illustrated in Fig. 3.

DESCRIPTION OF EMBODIMENTS

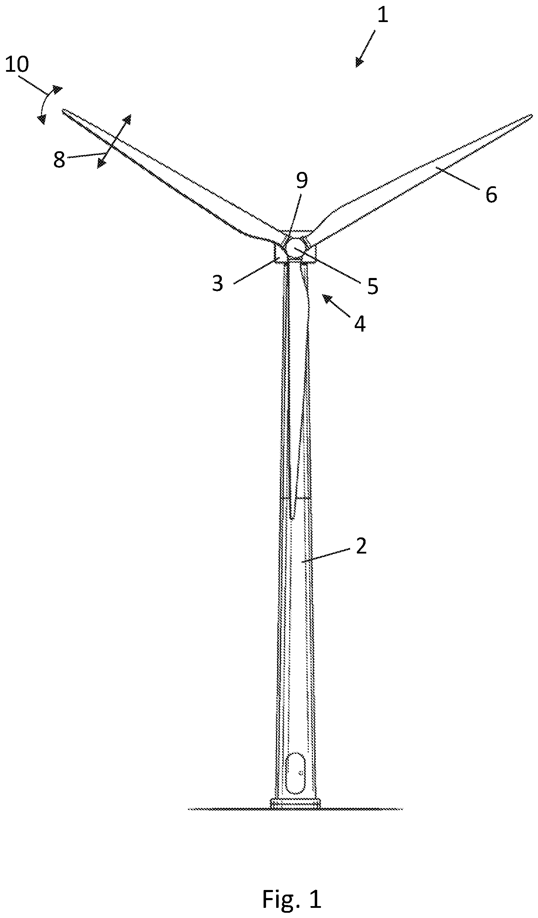

Figure 1 illustrates, in a schematic view, an example of a wind turbine 1. The wind turbine 1 includes a tower 2, a nacelle 3 disposed at the apex of the tower, and a rotor 4 operatively coupled to a generator housed inside the nacelle 3. In addition to the generator, the nacelle houses miscellaneous components required for converting wind energy into electrical energy and various components needed to operate, control, and optimize the performance of the wind turbine 1. The rotor 4 of the wind turbine includes a central hub 5 and three blades 6 that project outwardly from the central hub 5. Moreover, the wind turbine comprises a control system. The control system may be placed inside the nacelle, in the tower or distributed at a number of locations inside (or externally to) the turbine and communicatively connected. The rotor blades are pitch-adjustable. The rotor blades can be adjusted in accordance with a collective pitch setting, where each of the blades are set to the same pitch value. In addition to that, the rotor blades are adjustable in accordance with individual pitch settings, where each blade may be provided with an individual pitch setpoint.

In the embodiments of the present invention, blade load signals for each of the pitch adjustable rotor blades are used. Such blade load signals may be measured at the blade root 9 by means of blade load sensors placed at each blade root in a manner so that the sensor detects loading in the blade. Depending on the placement and the type of sensor, loading may be detected in the flap direction 10 (in/out of plane) or in the edgewise direction 8 (in-plane). Such sensor may in embodiments be a strain gauge sensor or an optical Bragg-sensor. As the sensors are placed on the rotating blade, such load signals for each of the adjustable rotor blades are measured in the rotating reference frame of the rotor.

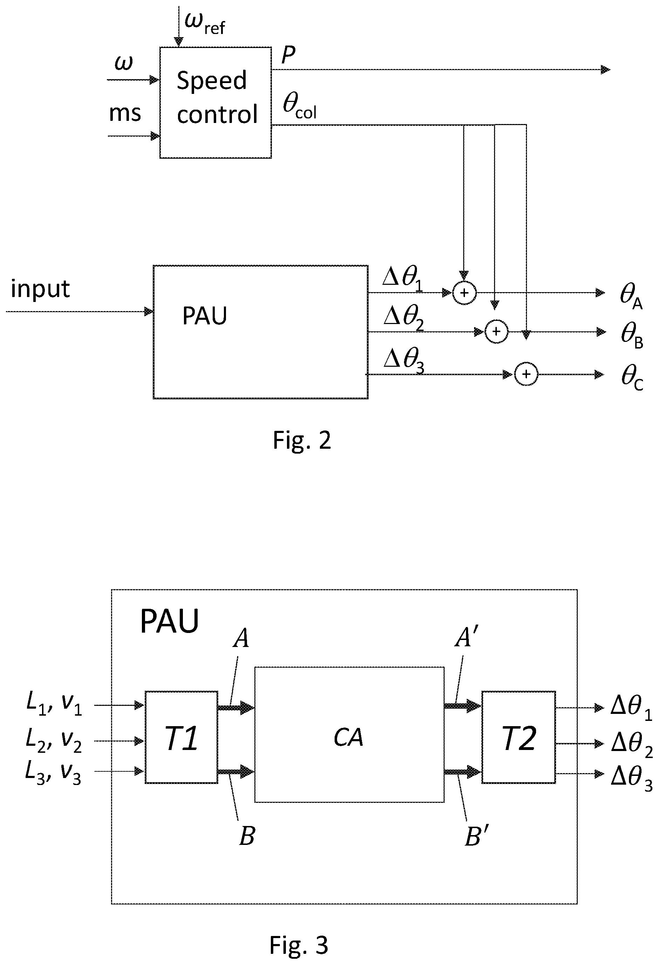

Fig. 2 is a diagram schematically illustrating an embodiment of a feedback speed controller implemented to determine individual pitch actuation signals capable of reducing blade loads in accordance with embodiments of the present invention. In the illustrated implementation, the speed controller minimizes a speed error ($\omega$ - $\omega_{ref}$) between the actual rotor speed, $\omega$, and a reference rotor speed, $\omega_{ref}$, in order to output a requested power $P$ (in the form of a power setpoint) and a collective pitch reference, $\theta_{col}$. The collective pitch reference as determined by the speed controller, in view of the rotor speed, may also take further sensor values into account, this is referred to in Fig. 2 as a measurement set, ms, being input into the speed controller. The feedback speed controller may be implemented by a PI, PID or similar control schemes. In an embodiment, the speed controller may alternatively be a model predictive controller which based on minimizing a cost function is arranged to determine the collective pitch reference and/or the power reference.

Fig. 2 further illustrates a blade load reducing control block referred to as pitch actuation units (PAU). In the pitch actuation unit pitch modification signals ($\Delta\theta_1$, $\Delta\theta_2$, $\Delta\theta_3$) are being determined based on input signal(s), the input signal include blade load signals. An embodiment of the implementation of the pitch actuation unit (PAU) is illustrated in Fig. 3.

The PAU control unit determines pitch modification signals ($\Delta\theta_1$, $\Delta\theta_2$, $\Delta\theta_3$) for each rotor blade which are superimposed onto the collective pitch reference to provide resulting pitch modification signals ($\theta_A$, $\theta_B$, $\theta_C$) that can be applied to the pitch actuators of the rotor blades individually.

In the embodiment shown in Fig. 2, a collective pitch reference for the pitch-adjustable rotor blades is being determined based on a rotor speed and a resulting pitch modification signal is being applied to the pitch-adjustable rotor blades. The resulting pitch modification signal being applied to the pitch-adjustable rotor blades individually, and for each individual blade being based on a signal of the collective pitch reference and the individual pitch modification signals. In an embodiment, the individual pitch modification signal is being applied in a cyclic manner.

Thus, pitch actuation signals are determined for each pitch adjustable rotor blade based on the pitch modification signal for each rotor blade.

Figure 3 schematically illustrates an embodiment of a pitch actuation unit (PAU) based on blade coordinate transformations (*T1, T2*) to determine the pitch modification signals ($\Delta\theta_1$, $\Delta\theta_2$, $\Delta\theta_3$).

The three blade load signals ($L_1, L_2, L_3$) are obtained as sensor input signals, and may be blade load signal along a flapwise direction or a blade load signal along an edgewise direction. The three blade load signals ($L_1, L_2, L_3$) are obtained in the rotating reference frame and used as inputs. These blade load signals are transformed into a references frame by application of a first coordinate transformation *T1,* and the desired control actions (*CA*) on the signals are applied in the reference frame. To bring the modified signals back into the rotating frame to be used as pitch actuation signals, a second transformation, *T2,* is applied, typically in the form of an inverse Coleman transformation. In this manner the rotor loads are influenced in a manner so that the measured rotor loads are reduced.

In embodiments according to the present invention a rotor control system is provided which is capable of operating according to the above defined general scheme in a situation where one of the blade load signals are unavailable, typically due to a malfunctioning blade load sensor.

In addition to the three blade load signals for each of the blades ($L_1, L_2, L_3$), availability signals ($v_1, v_2, v_3$) are also received or determined. In the event one of the blade load signals is unavailable, the pitch actuation unit is implemented to construct combined load signals based on the available blade load signals. The combined load signals are signals determined to provide a first signal component *(A)* and a second signal component *(B),* on which a control action can be performed in order to reduce the measured blade loads.

The control action may be applied to the first and second signal components to provide a first resulting signal component (*A'*) and a second resulting signal component (*B'*). An m-blade coordinate transformation (*T2*), e.g. in the form of an inverse Coleman transformation, may be applied to the first resulting signal component and the second resulting signal component to obtain the pitch modification signals ($\Delta\theta_1$, $\Delta\theta_2$, $\Delta\theta_3$). These pitch modification signals are then applied to the pitch actuator.

The combined load signals are determined in a manner so that the rotor control system can function with only two available blade load signals. The combined load signals are obtained in a first transformation, *T1,* which advantageously is split in a number of steps.

Important steps include the application of a high pass filter to the blade load signals, in combination with replacing the unavailable blade load signal with an estimated signal and transforming the remaining available and valid blade load signals using a first coordinate transformation (*T1*) to an intermediate coordinate frame, where each of the associated components of the load signal in the intermediate coordinate frame are orthogonal to each other.

By application of the high pass filter, in combination with using an estimated signal as the unavailable signal, an accurate representation of all three load signals can be obtained in the intermediate coordinate frame.

Transforming coordinates values from a rotating coordinate system where the axes are spaced 120 degrees (due to the blades position) to a coordinate system where each of the coordinate values are orthogonal to each other can be done using e.g. the Clarke transformation, which is known from electrical engineering:

$$\begin{bmatrix} v_\alpha \\ v_\beta \\ v_\gamma \end{bmatrix} = \frac{2}{3} \begin{bmatrix} 1 & -1/2 & -1/2 \\ 0 & \sqrt{3}/2 & -\sqrt{3}/2 \\ 1/2 & 1/2 & 1/2 \end{bmatrix} \begin{bmatrix} L_1 \\ L_2 \\ L_3 \end{bmatrix}$$

where ($L_1, L_2, L_3$) are the three blade load signals, and ($v_\alpha, v_\beta, v_\gamma$) are the components of the associated components of the load signal in the intermediate coordinate frame.

As an example, the Clarke transformation is applied to the situation where the $L_3$ signal is unavailable and being replaced an estimated signal being a super position in the form of a linear transformation of the available signals, e.g. set as $-(L_1 + L_2)+\kappa$:

$$\begin{bmatrix} v_\alpha \\ v_\beta \end{bmatrix} = \frac{1}{3} \begin{bmatrix} 2 & -1 & -1 \\ 0 & \sqrt{3} & -\sqrt{3} \end{bmatrix} \begin{bmatrix} L_1 \\ L_2 \\ -(L_1 + L_2) + \kappa \end{bmatrix} = \frac{1}{3} \begin{bmatrix} 3L_1 \\ \sqrt{3}(L_1 + 2L_2 + \kappa) \end{bmatrix}$$

The $v_\gamma$ component is omitted as it will be virtually zero due to the high-pass filtering, which will also remove the $\kappa$-factor in the resulting vector components.

In the transform, the unavailable blade load signal is replaced with the estimated signal. This gives rise to three situations depending on which blade load signal that is unavailable, and three sets of intermediate components can be determined. In an embodiment the unavailable signal ($L_{UA}$) is replaced by: $L_{UA} = -(L_{A1} + L_{A2})+\kappa$, where the subscript A1 and A2 refers to the first available signal and second available signal, respectively. After the high-pass filter, the constant $\kappa$ is removed, and the three sets of intermediate components can be determined as follows:

$L_3$ signal unavailable:

$$\begin{bmatrix} v_\alpha \\ v_\beta \end{bmatrix} = \begin{bmatrix} L_1 \\ (L_1 + 2L_2)/\sqrt{3} \end{bmatrix}$$

$L_1$ signal unavailable:

$$\begin{bmatrix} v_\alpha \\ v_\beta \end{bmatrix} = \begin{bmatrix} -L_2 - L_3 \\ (L_2 - L_3)/\sqrt{3} \end{bmatrix}$$

$L_2$ signal unavailable:

$$\begin{bmatrix} v_\alpha \\ v_\beta \end{bmatrix} = \begin{bmatrix} L_1 \\ (L_1 - 2L_3)/\sqrt{3} \end{bmatrix}$$

The transformation is done using the appropriate representation of the load signals, and a first intermediate component, $v_\alpha$, is set as the first component of the transformed blade load signals resulting from the first coordinate transformation, and the second intermediate component, $v_\beta$, is set as the second component of the transformed blade load signals.

It is noted that with pairings of blade load sensors, two orthogonal components can be calculated via different, but equivalent, linear combinations.

To obtain the first signal component ($A$) and the second signal component ($B$), the first intermediate component and the second intermediate component are rotated to align with the reference frame along the first and the second reference direction. In an embodiment, the rotor azimuth angle $\Phi$ is used to align the first signal component and the second signal component with the nacelle fixed reference system, often referred to as the D-Q-frame or the tilt-yaw frame. In this embodiment, the $\alpha\beta$-vector by the rotation matrix:

$$\begin{bmatrix} A \\ B \end{bmatrix} = \begin{bmatrix} \cos\Phi & \sin\Phi \\ -\sin\Phi & \cos\Phi \end{bmatrix} \begin{bmatrix} v_\alpha \\ v_\beta \end{bmatrix}.$$

In a general situation where a general estimated signal is applied, the first signal component ($A$) and the second signal component ($B$) are obtained as explained above, by the coordinate transformation to the intermediate coordinate frame, e.g. using the Clark transformation, followed by the rotation of the intermediate components to align with the reference frame in which the control action is applied, as explained above.

In a specific situation where the estimated signal is set as the negative sum of the two available blade load signals, the coordinate transformation to the intermediate coordinate frame followed by the rotation of the intermediate components to align with the reference frame in which the control action is applied becomes equivalent, or at least approximatively equivalent, to applying a Coleman transformation on the relevant sets of intermediate components. In this situation the implementation of the calculation can be simplified by constructing the combined load signals by:

apply a high pass filter to the blade load signals;
set the unavailable blade load signal as an estimated signal as the negative sum of the two available blade load signals: $-(L_1 + L_2)$;
apply a Coleman transform to the relevant set of available load signals and estimated signal to obtain the first signal component ($A$) and the second signal component ($B$), respectively.

In an embodiment, in addition to applying the high pass filter to the blade load signals, a notch filter is applied at a 3P blade passing frequency. In particular, in a situation where the blade load signals are blade load signals in the flapwise direction, it may be beneficial to notch out the 3P blade passing frequency. In general, a notch filter may be applied at a frequency where a load is synchronized for all three blades where the load disturbance appears collective on the blades. In addition to the 3P blade passing frequency for flap loads, also 6P, 9P, etc. may be notched out.

In an embodiment, the high pass filter is set at a cut off below a 1P blade passing frequency, such as one decade below the 1P blade passing frequency, to ensure sufficient separation between the cut off and the 1P frequency. In another embodiment, the high pass filter is set at a cut off below a frequency of changes in the mean wind speed. Again, the cut off may be set one decade below the 1P blade passing frequency. The changes in the mean wind speed may be determined based on a predetermined determination made prior to installing the turbine and thereby based on historic data of a fixed period of time. The changes in the mean wind speed may also be determined based on a recurring determination of mean wind speed.

In an advantageous embodiment, the control action (CA) applied is the same irrespectively of whether or not all three blade load signals are available, or only two blade load signals are available. An important advantage of embodiments of the present invention is that it can be implemented in a manner so that the first signal component and the second signal component are independent on the control action. In a situation where one blade load signal becomes unavailable, the rotor control system can be implemented to enable the first coordinate transformation (*T1*) in accordance with the embodiments of the present invention, and in a situation where all blade load sensors are available to use a different manner of obtaining the first signal component and the second signal component. For example, if all three available blade load signals are available, a normal Coleman transformation may be used.

In the event two or three blade load signals becomes unavailable, the turbine may be operated in a safe mode, e.g. in a derated mode or shutdown.

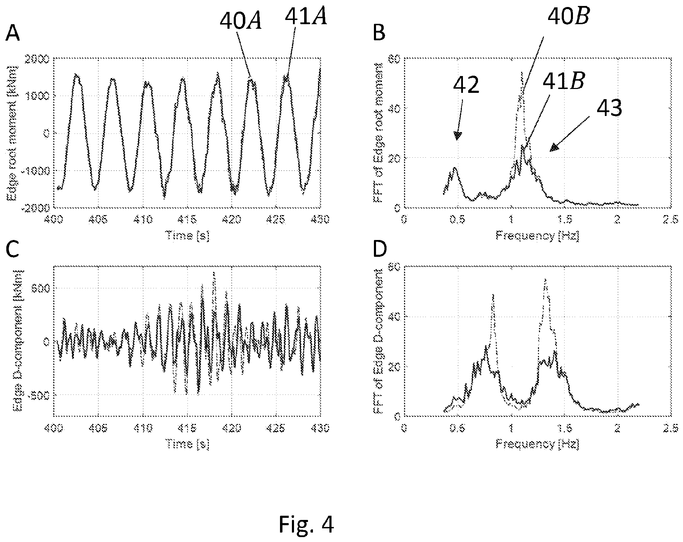

Figure 4 illustrates simulated signals, with and without application of the embodiment of Fig. 3. In the graphs the dotted lines are from simulations obtained with three available blade load sensors and without any load reducing control action being applied, i.e. the PAU of Fig. 3 is not enabled. The solid lines are from simulations obtained with two available load sensors and with a load reducing control action being applied, i.e. the PAU of Fig. 3 is being enabled.

The load sensors are blade load sensors in the form of blade root load moment sensors arranged to detect the load moment in the edgewise direction of the blade, i.e. in the direction along the line between the leading edge and the trailing edge of the blade.

Fig. 4A illustrates a time trace of the edgewise load signal of one of the rotor blades for a ranges between 400 and 430 seconds, while the two signals are somewhat overlaid, one trace (dotted) 40A is for a situation where the PAU of Fig. 3 is not enabled and all three load sensors being available, and the other trace (solid) 41A is for a situation where the PAU of Fig. 3 is enabled and two load sensor signals being available.

The differences in the two signals are better seen in Fig. 4B which shows an FFT plot of the signals of Fig. 4A. Here, the signal 40B is for the situation where the PAU is not enabled, whereas the signal 41B is for the situation where the PAU is enabled and only two load sensor signals being available. Signal content is seen at two frequencies, namely at the 1P frequency 42 and the edge frequency 43 of the rotor blade. As can be seen there is not a difference in the signal content at the 1P peak since the rotor frequency is not changed, however a clear reduction of the signal content at the edge frequency is seen, due to the load reduction from the added pitch actuation. Embodiments of the present invention thus provides a rotor control system with the effect of a reduction in edgewise vibrations of the blades of the turbine, even in the situation where only two load sensors are available.

Fig. 4C and Fig. 4D illustrates corresponding figures, but for the so-called edge D-component. This corresponds to the signal A of Fig. 3, i.e. the first signal component along the first reference direction. In the D-Q reference frame, the edgewise frequency component split into a forward and a backward component as can be seen in Fig. 4D. The load reduction is also clearly visible in the reference frame.

**Claims**

1. Rotor control system for actuating pitch of pitch-adjustable rotor blades of a three-bladed wind turbine, the rotor control system comprises a pitch actuating unit for determining pitch modification signals to be applied to a pitch actuator for actuating the pitch of the pitch adjustable rotor blades in the event one of the blade load signals is unavailable; the pitch actuation unit being arranged to:

    receive blade load signals for each of the pitch adjustable rotor blades and an availability signal for each of the blade load signals;
    construct combined load signals based on the available blade load signals, with the combined load signals being represented in a reference frame along a first and a second reference direction as a first signal component (*A*) and a second signal component (*B*), respectively;
    perform a control action (CA) to the first signal component and the second signal component; and
    apply the pitch modification signals ($\Delta\theta_1$, $\Delta\theta_2$, $\Delta\theta_3$) to the pitch actuator;
    wherein the combined load signals are constructed by:

apply a high pass filter to the blade load signals;

transform the blade load signals using a first coordinate transformation ($T1$) to an intermediate coordinate frame, where each of the associated components of the load signal in the intermediate coordinate frame are orthogonal to each other, and wherein, in the transform, the unavailable blade load signal ($L_3$) is replaced with an estimated signal being a negative sum of two available blade load signals ($-(L_1 + L_2)$);

set a first intermediate component as the first component of the transformed blade load signals resulting from the first coordinate transformation ($T1$); and

set a second intermediate component as the second component of the transformed blade load signals resulting from the first coordinate transformation ($T1$);

rotate the first intermediate component and the second intermediate component to align with the reference frame along the first and the second reference direction; and

set the first signal component (A) and the second signal component (B) as the rotated first and second intermediate components, respectively.

2. The rotor control system according to claim 1, wherein the blade load signal is a blade load signal along a flapwise direction or a blade load signal along an edgewise direction.

3. The rotor control system according to any preceding claims wherein in addition to applying the high pass filter to the blade load signals, a notch filter is applied at a frequency where a load is synchronized for all three blades.

4. The rotor control system according to any preceding claims wherein the high pass filter is set at a cut off below a 1P blade passing frequency

5. The rotor control system according to any preceding claims wherein the high pass filter is set at a cut off below a frequency of changes in the mean wind speed.

6. The rotor control system according to any preceding claims wherein the transform of the blade load signals using the first coordinate transformation ($T1$) comprises applying a Clarke transformation.

7. The rotor control system according to any preceding claims wherein the rotation of the first intermediate component and the second intermediate component is a rotation with the rotor azimuth angle.

8. The rotor control system according to any preceding claims wherein in a situation were all blade load signals are available, the first signal component and the second signal component are determined based on the available blade load signals, and the control action (CA) performed on the first signal component and the second signal component is the same control action (CA) performed on the first signal component and the second signal component when one of the blade load signals becomes unavailable.

9. The rotor control system according to any preceding claims, in the event a two or three blade load signals are unavailable, the turbine is operated in a safe mode.

10. The rotor control system according to any preceding claims further comprising applying an m-blade coordinate transformation ($T2$) to the first signal component and the second signal component to obtain the pitch modification signals ($\Delta\theta_1$, $\Delta\theta_2$, $\Delta\theta_3$).

11. The rotor control system according to any preceding claims further comprising:

determine a collective pitch reference for the pitch-adjustable rotor blades, the collective pitch reference being determined based on a rotor speed,

apply a resulting pitch modification signal to the pitch-adjustable rotor blades, the resulting pitch modification signal being applied to the pitch-adjustable rotor blades individually, and for each individual blade being based on a signal of the collective pitch reference and the pitch modification signals.

12. A wind turbine comprising the rotor control system according to any of the claims 1 to 11.

13. A method of actuating pitch of pitch adjustable rotor blades of a three-bladed wind turbine, the wind turbine comprises a pitch actuator for actuating the pitch of the pitch adjustable rotor blades, the method comprises:

receive blade load signals for each of the pitch adjustable rotor blades and an availability signal for each of the blade load signals;

construct combined load signals based on the available blade load signals, with the combined load signals being represented in a reference frame along a first and a second reference direction as a first signal component ($A$) and a second signal component ($B$), respectively;

perform a control action (CA) to the first signal component and the second signal component; and

apply the pitch modification signals ($\Delta\theta_1$, $\Delta\theta_2$, $\Delta\theta_3$) to the pitch actuator;

wherein the combined load signals are constructed by:

apply a high pass filter to the blade load signals;

transform the blade load signals using a first coordinate transformation ($T1$) to an intermediate coordinate frame, where each of the associated components of the load signal in the intermediate coordinate frame are orthogonal to each other, and wherein, in the transform, the unavailable blade load signal ($L_3$) is replaced with an estimated signal being a negative sum of two available blade load signals ($-(L_1 + L_2)$);

set a first intermediate component as the first component of the transformed blade load signals resulting from the first coordinate transformation ($T1$); and

set a second intermediate component as the second component of the transformed blade load signals resulting from the first coordinate transformation ($T1$);

rotate the first intermediate component and the second intermediate component to align with the reference frame along the first and the second reference direction; and

set the first signal component *(A)* and the second signal component *(B)* as the rotated first and second intermediate components, respectively.

14. A computer program product comprising software code adapted to control a wind turbine when executed on a data processing system, the computer program product being adapted to perform the method of claim 13.

**Patentansprüche**

1. Rotorsteuersystem zum Verstellen des Anstellwinkels von Rotorblättern mit verstellbarem Anstellwinkel einer dreiflügeligen Windkraftanlage, wobei das Rotorsteuersystem eine Anstellwinkel-Verstellungseinheit zum Bestimmen von Anstellwinkel-Modifikationssignalen umfasst, die an einen Anstellwinkel-Stellantrieb zum Verstellen des Anstellwinkels der Rotorblätter mit verstellbarem Anstellwinkel angelegt werden sollen, falls eines der Blattlastsignale nicht verfügbar ist,

wobei die Anstellwinkel-Verstellungseinheit zu Folgendem angeordnet ist:

Blattlastsignale für jedes von den Rotorblättern mit verstellbarem Anstellwinkel und ein Verfügbarkeitssignal für jedes von den Blattlastsignalen zu empfangen;

kombinierte Lastsignale auf Grundlage der verfügbaren Blattlastsignale aufzubauen, wobei die kombinierten Lastsignale in einem Bezugsrahmen entlang einer ersten und einer zweiten Bezugsrichtung jeweils als eine erste Signalkomponente ($A$) beziehungsweise eine zweite Signalkomponente ($B$) dargestellt werden;

eine Steueraktion (CA) an der ersten und der zweiten Signalkomponente durchzuführen und

die Anstellwinkel-Modifikationssignale ($\Delta\vartheta_1$, $\Delta\vartheta_2$, $\Delta\vartheta_3$) an den Anstellwinkel-Stellantrieb anzulegen;

wobei die kombinierten Lastsignale durch Folgendes aufgebaut sind:

Anwenden eines Hochpassfilters auf die Blattlastsignale;

Umformen der Blattlastsignale unter Verwendung einer ersten Koordinatentransformation *(T1)* zu einem Zwischenkoordinatensystem, wobei jede von den zugehörigen Komponenten des Lastsignals im Zwischenkoordinatensystem orthogonal zueinander ist und wobei, in der Transformation, das nicht verfügbare Blattlastsignal ($L_3$) durch ein geschätztes Signal ersetzt wird, das eine negative Summe zweier verfügbarer Blattlastsignale ($-(L_1 + L_2)$) ist;

Festlegen einer ersten Zwischenkomponente als die erste Komponente der umgeformten Blattlastsignale, die sich aus der ersten Koordinatentransformation ergeben *(T1)*; und

Festlegen einer zweiten Zwischenkomponente als die zweite Komponente der umgeformten Blattlastsignale festgelegt, die sich aus der ersten Koordinatentransformation ergeben *(T1)*;

Drehen der ersten Zwischenkomponente und der zweiten Zwischenkomponente, um sie entlang der ersten und der zweiten Referenzrichtung mit dem Bezugsrahmen auszurichten; und

Festlegen der ersten Signalkomponente ($A$) und der zweiten Signalkomponente ($B$) jeweils als die gedrehte erste beziehungsweise zweite Zwischenkomponente.

2. Rotorsteuersystem nach Anspruch 1, wobei das Blattlastsignal ein Blattlastsignal entlang einer Schlagrichtung oder ein Blattlastsignal entlang einer Kantenrichtung ist.

3. Rotorsteuersystem nach einem der vorstehenden Ansprüche, wobei zusätzlich zum Anwenden des Hochpassfilters auf die Blattlastsignale ein Kerbfilter bei einer Frequenz angewendet wird, bei der eine Last für alle drei Blätter synchronisiert wird.

4. Rotorsteuersystem nach einem der vorstehenden Ansprüche, wobei der Hochpassfilter auf eine Grenzfrequenz unterhalb einer IP-Blattpassierfrequenz eingestellt ist.

5. Rotorsteuersystem nach einem der vorstehenden Ansprüche, wobei der Hochpassfilter auf eine Grenzfrequenz unterhalb einer Frequenz von Änderungen bei der mittleren Windgeschwindigkeit eingestellt ist.

6. Rotorsteuersystem nach einem der vorstehenden Ansprüche, wobei die Transformation der Blattlastsignale unter Verwendung der ersten Koordinatentransformation ($T1$) das Anwenden einer Clarke-Transformation umfasst.

7. Rotorsteuersystem nach einem der vorstehenden Ansprüche, wobei die Drehung der ersten Zwischenkomponente und der zweiten Zwischenkomponente eine Drehung mit dem Rotorazimutwinkel ist.

8. Rotorsteuersystem nach einem der vorstehenden Ansprüche, wobei in einer Situation, in der alle Blattlastsignale verfügbar sind, die erste Signalkomponente und die zweite Signalkomponente auf Grundlage der verfügbaren Blattlastsignale bestimmt werden und die an der ersten Signalkomponente und der zweiten Signalkomponente durchgeführte Steueraktion ($CA$) die gleiche Steueraktion ($CA$) ist, die an der ersten Signalkomponente und der zweiten Signalkomponente durchgeführt wird, wenn eines der Blattlastsignale unverfügbar wird.

9. Rotorsteuersystem nach einem der vorstehenden Ansprüche, wobei im Falle, dass zwei oder drei Blattlastsignale nicht verfügbar sind, die Turbine in einem sicheren Modus betrieben wird.

10. Rotorsteuersystem nach einem der vorstehenden Ansprüche, weiter umfassend das Anwenden einer m-Blatt-Koordinatentransformation ($T2$) auf die erste Signalkomponente und die zweite Signalkomponente, um die Anstellwinkel-Modifikationssignale ($\Delta\vartheta_1$, $\Delta\vartheta_2$, $\Delta\vartheta_3$) zu erhalten.

11. Rotorsteuersystem nach einem der vorstehenden Ansprüche, weiter umfassend:

    Bestimmen einer gemeinsamen Anstellwinkelreferenz für die Rotorblätter mit einstellbarem Anstellwinkel, wobei die gemeinsame Anstellwinkelreferenz auf Grundlage einer Rotorgeschwindigkeit bestimmt wird,
    Anwenden eines sich ergebenden Anstellwinkel-Modifikationssignals auf die Rotorblätter mit einstellbarem Anstellwinkel, wobei das sich ergebende Anstellwinkel-Modifikationssignal einzeln auf die Rotorblätter mit einstellbarem Anstellwinkel angewendet wird und für jedes einzelne Blatt auf einem Signal aus der gemeinsamen Anstellwinkelreferenz und den Anstellwinkel-Modifikationssignalen beruht.

12. Windkraftanlage, die das Rotorsteuersystem nach einem der Ansprüche 1 bis 11 umfasst.

13. Verfahren zum Verstellen des Anstellwinkels von Rotorblättern mit einstellbarem Anstellwinkel einer dreiflügeligen Windkraftanlage, wobei die Windkraftanlage einen Anstellwinkel-Stellantrieb zum Verstellen des Anstellwinkels der Rotorblätter mit einstellbarem Anstellwinkel umfasst, wobei das Verfahren Folgendes umfasst:

    Empfangen von Blattlastsignalen für jedes von den Rotorblättern mit verstellbarem Anstellwinkel und eines Verfügbarkeitssignals für jedes von den Blattlastsignalen;
    Aufbauen kombinierter Lastsignale auf Grundlage der verfügbaren Blattlastsignale, wobei die kombinierten Lastsignale in einem Bezugsrahmen entlang einer ersten und einer zweiten Bezugsrichtung jeweils als eine erste Signalkomponente ($A$) beziehungsweise eine zweite Signalkomponente ($B$) dargestellt werden;
    Durchführen einer Steueraktion ($CA$) an der ersten Signalkomponente und der zweiten Signalkomponente und Anlegen der Anstellwinkel-Modifikationssignale ($\Delta\vartheta_1$, $\Delta\vartheta_2$, $\Delta\vartheta_3$) an den Anstellwinkel-Stellantrieb;
    wobei die kombinierten Lastsignale durch Folgendes aufgebaut werden:

Anwenden eines Hochpassfilters auf die Blattlastsignale;

Umformen der Blattlastsignale unter Verwendung einer ersten Koordinatentransformation *(T1)* zu einem Zwischenkoordinatensystem, wobei jede von den zugehörigen Komponenten des Lastsignals im Zwischenkoordinatensystem orthogonal zueinander ist und wobei, in der Transformation, das nicht verfügbare Blattlastsignal ($L_3$) durch ein geschätztes Signal ersetzt wird, das eine negative Summe zweier verfügbarer Blattlastsignale ($-(L_1 + L_2)$) ist;

Festlegen einer ersten Zwischenkomponente als die erste Komponente der umgeformten Blattlastsignale, die sich aus der ersten Koordinatentransformation ergeben *(T1);* und

Festlegen einer zweiten Zwischenkomponente als die zweite Komponente der umgeformten Blattlastsignale festgelegt, die sich aus der ersten Koordinatentransformation ergeben *(T1);*

Drehen der ersten Zwischenkomponente und der zweiten Zwischenkomponente, um sie entlang der ersten und der zweiten Referenzrichtung mit dem Bezugsrahmen auszurichten; und

Festlegen der ersten Signalkomponente *(A)* und der zweiten Signalkomponente *(B)* jeweils als die gedrehte erste beziehungsweise zweite Zwischenkomponente.

14. Computerprogrammprodukt, umfassend Softwarecode, der angepasst ist, um eine Windkraftanlage zu steuern, wenn er auf einem Datenverarbeitungssystem ausgeführt wird, wobei das Computerprogrammprodukt angepasst ist, um das Verfahren nach Anspruch 13 durchzuführen.

## Revendications

1. Système de commande de rotor pour actionner le calage de pales de rotor à calage réglable d'une éolienne à trois pales, le système de commande de rotor comprend une unité d'actionnement de calage pour déterminer les signaux de modification de calage à appliquer à un actionneur de calage pour actionner le calage des pales de rotor à calage réglable dans le cas où l'un des signaux de charge de pale n'est pas disponible ;

   l'unité d'actionnement de calage étant agencée pour :

   recevoir des signaux de charge de pale pour chacune des pales de rotor à calage réglable et un signal de disponibilité pour chacun des signaux de charge de pale ;

   construire des signaux de charge combinés basés sur les signaux de charge de pale disponibles, les signaux de charge combinés étant représentés dans un cadre de référence le long d'une première et d'une seconde direction de référence comme une première composante de signal (*A*) et une seconde composante de signal (*B*), respectivement ;

   effectuer une action de commande (*AC*) sur la première composante de signal et la seconde composante de signal ; et

   appliquer les signaux de modification de calage ($\varDelta\vartheta_1$, $\varDelta\vartheta_2$, $\varDelta\vartheta_3$) à l'actionneur de calage ;

   dans lequel les signaux de charge combinés sont construits par :

   l'application d'un filtre passe-haut aux signaux de charge de pale ;

   la transformation des signaux de charge de pale à l'aide d'une première transformation de coordonnées *(T1)* vers un repère de coordonnées intermédiaire, où chacune des composantes associées du signal de charge dans le repère de coordonnées intermédiaire est orthogonale aux autres, et dans lequel, dans la transformation, le signal de charge de pale indisponible ($L_3$) est remplacé par un signal estimé étant une somme négative de deux signaux de charge de pale disponibles ($-(L_1 + L_2)$) ;

   la définition d'une première composante intermédiaire comme première composante des signaux de charge de pale transformés résultant de la première transformation de coordonnées *(T1)* ; et

   la définition d'une seconde composante intermédiaire comme seconde composante des signaux de charge de pale transformés résultant de la première transformation de coordonnées *(T1)* ;

   le pivotement de la première composante intermédiaire et de la seconde composante intermédiaire pour les aligner avec le repère de référence selon la première et la seconde direction de référence ; et

   la définition de la première composante de signal (*A*) et de la seconde composante de signal (*B*) comme les première et seconde composantes intermédiaires pivotées, respectivement.

2. Système de commande de rotor selon la revendication 1, dans lequel le signal de charge de pale est un signal de charge de pale dans une direction transversale ou un signal de charge de pale dans une direction longitudinale du profil.

3. Système de commande de rotor selon une quelconque revendication précédente, dans lequel, en plus d'appliquer le filtre passe-haut aux signaux de charge de pale, un filtre coupe-bande est appliqué à une fréquence où une charge est synchronisée pour les trois pales.

4. Système de commande de rotor selon une quelconque revendication précédente, dans lequel le filtre passe-haut est réglé à une fréquence de coupure inférieure à la fréquence de passage des pales 1P.

5. Système de commande de rotor selon une quelconque revendication précédente, dans lequel le filtre passe-haut est réglé à une fréquence de coupure inférieure à une fréquence de variation de la vitesse moyenne du vent.

6. Système de commande de rotor selon une quelconque revendication précédente, dans lequel la transformation des signaux de charge de pale utilisant la première transformation de coordonnées *(T1)* comprend l'application d'une transformation de Clarke.

7. Système de commande de rotor selon une quelconque revendication précédente, dans lequel la rotation de la première composante intermédiaire et de la seconde composante intermédiaire est une rotation avec l'angle azimutal de rotor.

8. Système de commande de rotor selon une quelconque revendication précédente, dans lequel, dans une situation où tous les signaux de charge de pale sont disponibles, la première composante de signal et la seconde composante de signal sont déterminées en fonction des signaux de charge de pale disponibles, et l'action de commande (AC) effectuée sur la première composante de signal et la seconde composante de signal est la même action de commande (AC) effectuée sur la première composante de signal et la seconde composante de signal lorsqu'un des signaux de charge de pale devient indisponible.

9. Système de commande de rotor selon une quelconque revendication précédente, dans le cas où les signaux de charge de deux ou trois pales ne sont pas disponibles, l'éolienne fonctionne en mode sécurisé.

10. Système de commande de rotor selon une quelconque revendication précédente, comprenant en outre l'application d'une transformation de coordonnées de pale m *(T2)* à la première composante de signal et à la seconde composante de signal pour obtenir les signaux de modification de calage ($\Delta\vartheta_1$, $\Delta\vartheta_2$, $\Delta\vartheta_3$).

11. Système de commande de rotor selon une quelconque revendication précédente, comprenant en outre :

la détermination d'une référence de calage collective pour les pales de rotor à calage réglable, la référence de calage collective étant déterminée sur la base d'une vitesse du rotor,
l'application d'un signal de modification de calage résultant aux pales de rotor à calage réglable, le signal de modification de calage résultant étant appliqué aux pales de rotor à calage réglable individuellement, et pour chaque pale individuelle, étant basé sur un signal de la référence de calage collective et des signaux de modification de calage.

12. Éolienne comprenant le système de commande de rotor selon l'une quelconque des revendications 1 à 11.

13. Procédé d'actionnement de calage de pales de rotor à calage réglable d'une éolienne à trois pales, l'éolienne comprend un actionneur de calage pour actionner le calage des pales de rotor à calage réglable, le procédé comprenant les étapes consistant à :

recevoir des signaux de charge de pale pour chacune des pales de rotor à calage réglable et un signal de disponibilité pour chacun des signaux de charge de pale ;
construire des signaux de charge combinés basés sur les signaux de charge de pale disponibles, les signaux de charge combinés étant représentés dans un cadre de référence le long d'une première et d'une seconde direction de référence comme une première composante de signal (*A*) et une seconde composante de signal (*B*), respectivement ;
effectuer une action de commande (AC) sur la première composante de signal et la seconde composante de signal ; et
appliquer les signaux de modification de calage ($\Delta\vartheta_1$, $\Delta\vartheta_2$, $\Delta\vartheta_3$) à l'actionneur de calage ;
dans lequel les signaux de charge combinés sont construits par :

l'application d'un filtre passe-haut aux signaux de charge de pale ;

la transformation des signaux de charge de pale à l'aide d'une première transformation de coordonnées $(T1)$ vers un repère de coordonnées intermédiaire, où chacune des composantes associées du signal de charge dans le repère de coordonnées intermédiaire est orthogonale aux autres, et dans lequel, dans la transformation, le signal de charge de pale indisponible ($L_3$) est remplacé par un signal estimé étant une somme négative de deux signaux de charge de pale disponibles ($-(L_1 + L_2)$) ;

la définition d'une première composante intermédiaire comme première composante des signaux de charge de pale transformés résultant de la première transformation de coordonnées $(T1)$ ; et

la définition d'une seconde composante intermédiaire comme seconde composante des signaux de charge de pale transformés résultant de la première transformation de coordonnées $(T1)$ ;

le pivotement de la première composante intermédiaire et de la seconde composante intermédiaire pour les aligner avec le repère de référence selon la première et la seconde direction de référence ; et

la définition de la première composante de signal ($A$) et de la seconde composante de signal ($B$) comme les première et seconde composantes intermédiaires pivotées, respectivement.

14. Produit de programme informatique comprenant un code logiciel adapté pour commander une éolienne lorsqu'il est exécuté sur un système de traitement de données, le produit de programme informatique étant adapté pour mettre en œuvre le procédé selon la revendication 13.

Fig. 1

Fig. 2

Fig. 3

Fig. 4

**EP 4 341 553 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2408246 A2